# EUROPEAN PATENT APPLICATION

(11) **EP 1 884 338 A1**
(43) Date of publication of application: **06.02.2008**
(21) Application number: 06425555.7
(22) Date of filing: 02.08.2006
(51) Int. Cl.: B29C 45/68

(54) **Injection press**

(71) Applicant: Sandretto Industrie S.r.l., 10095 Grugliasco (IT)
(72) Inventor: Di Dio, Leonardo, 10124 Torino (IT)
(74) Representative: Cerbaro, Elena

(57) **Abstract**

There is described a press (1) having: a first and a second half-mold (6, 4) settable in a first position, in which they cooperate to define an injection cavity (2), and in a second position, in which they are detached; and a lever mechanism (14a, 14b, 14c, 14d) having a first lever (21a, 21b, 21c, 21d, 22a, 22b, 22c, 22d) connected to a fixed portion (5), and a second lever (20a, 20b, 20c, 20d) connected to the first half-mold (6) and to the first lever (21a, 21b, 21c, 21d, 22a, 22b, 22c, 22d); the second lever (20a, 20b, 20c, 20d) is parallel to a given direction (A) when the first half-mold (6) is in the first position; the second lever (20a, 20b, 20c, 20d) is inclined with respect to the direction (A) when the first half-mold (6) is in the second position; the press (1) has an actuator (41, 42; 40, 43) having a first member (46, 51) connected to the fixed portion (5), and a second member (47, 52) connected to the first half mold (6) and detached from the lever mechanism (14a, 14b, 14c, 14d); the first member (46, 51) and the second member (47, 52) slide in the direction (A); and the actuator (41, 42; 40, 43) is activated to move the first half-mold (6) into the first position and the second position.

## Description

The present invention relates to an injection press.

Injection presses are known for producing a product of a given shape by setting molten material inside an injection cavity of complementary shape to the product being produced.

More specifically, the press comprises a fixed half-mold; and a movable half-mold, which is movable between a closed position, in which it is gripped against the fixed half-mold to define the injection cavity, and an open position, in which it is detached from the fixed half-mold and the injection cavity is open.

The press also comprises a variable-length actuator connected operatively to the movable half-mold by a number of, normally four, lever mechanisms, and activated selectively to move the movable half-mold between the closed position and the open position.

Very briefly, each lever mechanism comprises at least a first lever hinged to a fixed portion of the press; and a second lever hinged to the first lever and to the movable half-mold.

Each pair of lever mechanisms is connected operatively by a spider to a movable portion of the actuator. More specifically, the spider comprises a first portion hinged to the first levers of a first pair of lever mechanisms; and a second portion hinged to the first levers of the second pair of lever mechanisms.

The levers of each lever mechanism are shaped and connected so that, when the actuator is fully contracted, the levers of each lever mechanism assume a contracted configuration, in which they slope with respect to the approach/withdrawal direction in which the movable half-mold moves to/from the fixed half-mold.

Consequently, when the lever mechanisms are in the contracted configuration, the movable half-mold and the fixed portion of the press are a minimum distance apart, and the movable half-mold is in the open position.

Conversely, when the actuator is fully extended, each lever mechanism assumes an extended configuration, in which at least the relative second lever is substantially parallel to the approach/withdrawal direction in which the movable half-mold moves to/from the fixed half-mold, and the movable half-mold is in the closed position.

Once the lever mechanisms are in the extended configuration, the actuator remains actively in the fully extended position, and exerts considerable closing force on the movable half-mold to lock it against the fixed half-mold in opposition to the thrust of the molten material injected into the injection cavity.

Though efficient, known presses have the following drawbacks.

The actuator moves the movable half-mold between the open and closed positions by means of the lever mechanisms, which transmit motion highly nonlinearly between the spider and the movable half-mold.

More specifically, besides being nonlinear, the relationship between the position of the movable half-mold and the position of the spider also depends on the instantaneous position of the spider.

As a result, the speed and acceleration of the movable half-mold as it moves between the closed position and the open position are difficult to control.

The maximum speed and maximum acceleration of the movable half-mold are therefore limited to avoid severe stress of the component parts of the press, and severe vibration caused by fast acceleration and/or deceleration of the movable half-mold.

Moreover, the levers of each lever mechanism move in planes perpendicular to the direction in which the movable half-mold moves with respect to the fixed half-mold.

To prevent interference between the first levers and second levers of two lever mechanisms - one hinged to the top portion and the other to the bottom portion of the spider - as they move between the contracted configuration and the extended configuration, the first levers must be maintained inclined with respect to the approach/withdrawal direction even when the lever mechanisms are in the contracted configuration.

This results in lever mechanisms with particularly long first levers, and therefore in pressed of considerable bulk, to achieve sufficiently ample travel of the movable half-mold.

It is an object of the present invention to provide an injection press designed to eliminate, in a straightforward, low-cost manner, at least one of the aforementioned drawbacks typically associated with known injection presses.

According to the present invention, there is provided an injection press comprising:
- a first half-mold and a second half-mold; said first half-mold being movable, in a direction with respect to said second half-mold, between a first position, in which it cooperates with said second half-mold to define an injection cavity, and a second position, in which it is detached from said second half-mold; and
- at least one lever mechanism comprising a first lever connected operatively to a fixed portion of said press, and a second lever connected operatively to said first half-mold and to said first lever; said second lever being substantially parallel to said direction when said first half-mold is in said first position; said second lever being inclined with respect to said direction when said first half-mold is in said second position;
and characterized by comprising at least one variable-length actuator; said actuator comprising a first member connected to said fixed portion, and a second member connected directly to said first half-mold and detached from said lever mechanism;
said first member and said second member sliding with respect to each other in said direction;
said actuator being selectively activated to move said first half-mold into said first position and said second lever into a position substantially parallel to said direction, and to move said first half-mold into said second position and said second lever into a position inclined with respect to said direction.

The present invention also relates to an injection press comprising:
- a first half-mold and a second half-mold; said first half-mold being movable, in a direction with respect to said second half-mold, between a first position, in which it cooperates with said second half-mold to define an injection cavity, and a second position, in which it is detached from said second half-mold; and
- at least one pair of lever mechanisms, which are interposed between a fixed portion and said first half-mold, are superimposed one over the other, and are movable between an extended configuration and a contracted configuration to define said first and said second position of said first half-mold respectively;
and characterized in that said lever mechanisms have homologous levers which, as they move between the contracted configuration and the extended configuration, lie in parallel, spaced planes to prevent interference between the homologous levers.

A preferred, non-limiting embodiment of the present invention will be described by way of example with reference to the accompanying drawings, in which:
Figure 1 shows a view in perspective of an injection press in accordance with the present invention;
Figure 2 shows a smaller-scale, partly sectioned side view of the Figure 1 press in a first operating configuration;
Figure 3 shows a bigger-scale, top plan view of the Figure 1 press in the first operating configuration;
Figure 4 shows a smaller-scale, fully sectioned side view of the Figure 1 press in the first operating configuration;
Figure 5 shows a smaller-scale, fully sectioned side view of the Figure 1 press in a second operating configuration;
Figure 6 shows a section along line VI-VI in Figure 5;
Figure 7 shows a smaller-scale, fully sectioned side view of the Figure 1 press in a further operating configuration;
Figure 8 shows a larger-scale, exploded view of details of the Figure 1 press;
Figure 9 shows a layout of further details of the Figure 1 press;
Figure 10 shows the correlation between certain significant operating parameters of the Figure 1 press, and the correlation between certain significant operating parameters of known presses.

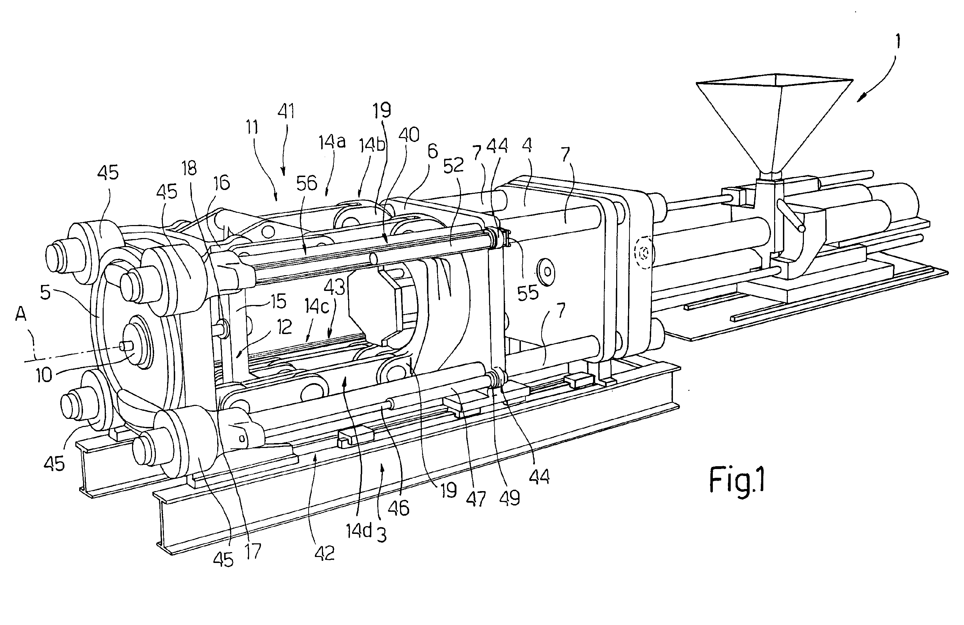

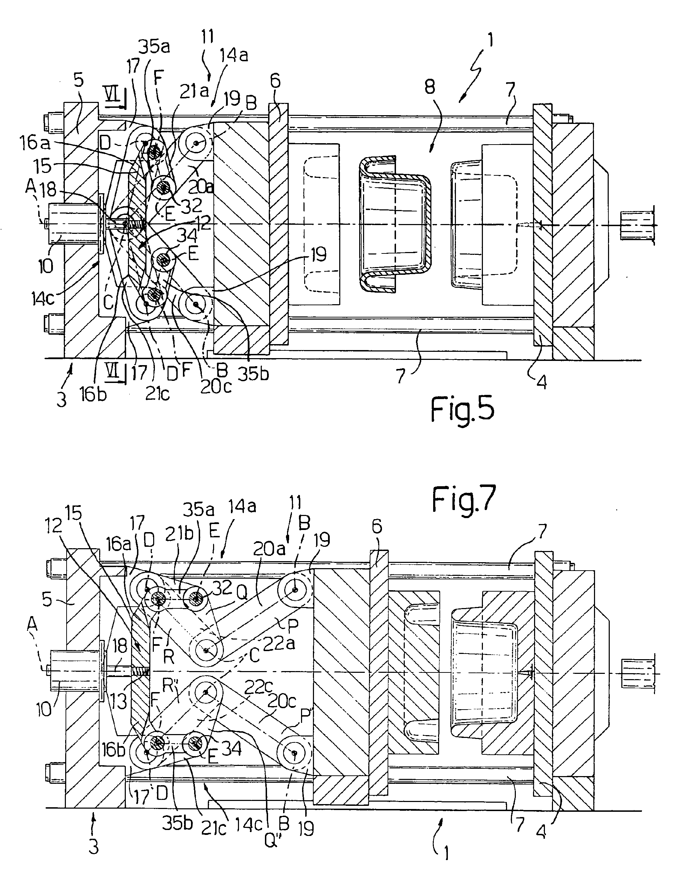

With reference to Figures 1 to 7, number 1 indicates an injection press for producing a product 8 (Figure 5) of given shape by injecting and subsequently setting molten material inside an injection cavity 2 complementary in shape to the product being produced.

More specifically, press 1 substantially comprises a bed 3; a fixed half-mold 4 fixed to a first end of bed 3; and a stop plate 5 fixed to a second end, opposite the first end, of bed 3.

Press 1 also comprises a movable half-mold 6, which slides in a direction A on a number of circular-section rails 7 fitted to bed 3.

More specifically, movable half-mold 6 translates freely, parallel to direction A, between a closed position, in which it cooperates with fixed half-mold 4 to define cavity 2, and an open position, in which it is detached from fixed half-mold 4.

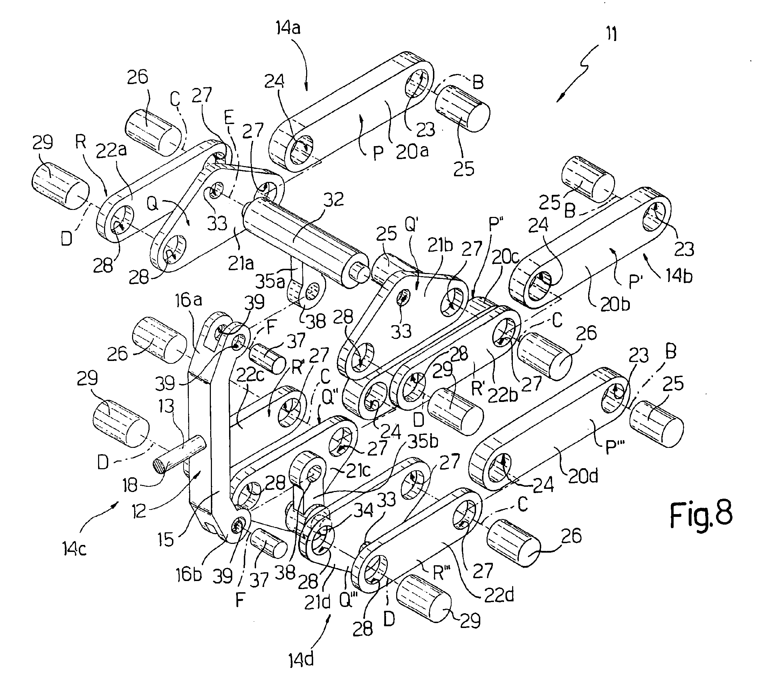

Press 1 also comprises a variable-length actuator 10; and a toggle mechanism 11 (shown in detail in Figure 8) for operatively connecting actuator 10 and movable half-mold 6.

More specifically, actuator 10 is a linear actuator, is mounted through stop plate 5, and comprises a portion 18 (only shown in Figures 1, 2, 4, 5 and 7) selectively extendable or contractable parallel to direction A.

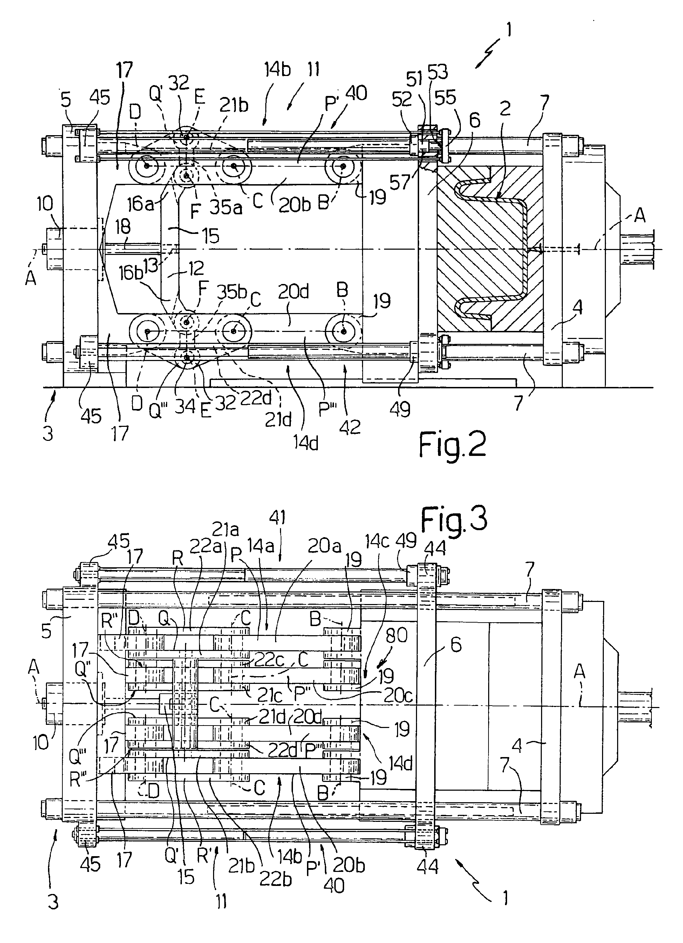

With particular reference to Figure 8, toggle mechanism 11 comprises a spider 12 integral with one end 13 (only shown in Figures 2, 4 and 7 for the sake of simplicity) of portion 18; and a number of - in the example shown, four - lever mechanisms 14a, 14b, 14c, 14d.

More specifically, each lever mechanism 14a, 14b, 14c, 14d is connected operatively to spider 12, to a relative portion of stop plate 5, and to a relative portion of movable half-mold 6.

Spider 12 extends longitudinally, in use, in a vertical direction, and comprises a main body 15 integral with end 13 of the actuator; and two, respectively top and bottom, end portions 16a, 16b projecting from main body 15 towards movable half-mold 6.

Two lever mechanisms 14a, 14b are connected operatively, facing each other and a given distance apart, to end portion 16a; and the other two lever mechanisms 14c, 14d are connected operatively, facing each other and a given distance apart, to end portion 16b.

More specifically, lever mechanisms 14a, 14b are located symmetrically on opposite sides of direction A.

Similarly, lever mechanisms 14c, 14d are also located symmetrically on opposite sides of direction A.

Lever mechanism 14a comprises a lever 20a hinged at one end to a projection 19 (shown in Figures 2, 3, 4, 5, 6 and 7) of movable half-mold 6 projecting towards stop plate 5; and two levers 21a, 22a, each of which is hinged at opposite ends to a projection 17 (shown in Figures 1, 2, 3, 4, 5 and 7) of stop plate 5, and to a second end, opposite the first end, of lever 20a.

Lever 20a is hinged to projection 19 of movable half-mold 6 about an axis B perpendicular to direction A and horizontal in use, and more specifically by means of a pin 25 engaging a hole 23 in lever 20a and a hole in projection 19.

Each lever 21a, 22a comprises two through holes 27, 28 at opposite longitudinal ends of lever 21a, 22a.

Levers 21a, 22a are hinged to opposite sides of lever 20a about a common axis C parallel to axis B, and more specifically by means of a pin 26 engaging holes 27 in levers 21a, 22a and a hole 24 in lever 20a.

Levers 21a, 22a are hinged to projection 17 of stop plate 5 about an axis D parallel to axes B, C, and more specifically by means of a pin 29 engaging holes 28 in levers 21a, 22a and a hole in projection 17.

Lever mechanisms 14b, 14c, 14d are similar to lever mechanism 14a and therefore not described in detail below.

Very briefly, lever mechanism 14b comprises a lever 20b hinged at respective hole 23 to movable half-mold 6; and two levers 21b, 22b hinged at respective holes 28 to stop plate 5, and at respective holes 27 to hole 24 in lever 20b.

Similarly, lever mechanism 14c comprises a lever 20c hinged at respective hole 23 to movable half-mold 6; and two levers 21c, 22c hinged at respective holes 28 to stop plate 5, and at respective holes 27 to hole 24 in lever 20c.

Lever mechanism 14d comprises a lever 20d hinged at respective hole 23 to movable half-mold 6; and two levers 21d, 22d hinged at respective holes 28 to stop plate 5, and at respective holes 27 to hole 24 in lever 20d.

Lever mechanisms 14a, 14b are connected operatively to each other by a pin 32, which extends along an axis E parallel to axis B, and engages, at opposite ends, further holes 33 in levers 21a, 21b.

Similarly, lever mechanisms 14c, 14d are connected operatively to each other by a pin 34, which extends along an axis E parallel to axis B, and engages, at opposite ends, holes 33 in levers 21c, 21d.

Lever mechanisms 14a, 14b are connected operatively to end portion 16a by a connecting rod 35a, which has a first end connected to pin 32, and a second end hinged to end portion 16a about an axis F; similarly, lever mechanisms 14c, 14d are connected operatively to end portion 16b by a connecting rod 35b, which has a first end connected to pin 34, and a second end hinged to end portion 16b about an axis F.

More specifically, each connecting rod 35a, 35b is hinged to relative end portion 16a, 16b by a relative pin 37, which engages a hole 38 in connecting rod 35a, 35b, and two holes 39 in the relative end portion 16a, 16b.

As shown in Figures 2 to 4, when movable half-mold 6 is in the closed position, toggle mechanism 11 is in an extended configuration, in which relative lever 20a, 20b, 20c, 20d of each lever mechanism 14a, 14b, 14c, 14d is substantially parallel to direction A to push movable half-mold 6 against fixed half-mold 4 in opposition to the force exerted by the molten material inside cavity 2.

As shown in Figure 5, when movable half-mold 6 is in the open position, toggle mechanism 11 is in a contracted configuration, in which relative lever 20a, 20b, 20c, 20d of each lever mechanism 14a, 14b, 14c, 14d is substantially inclined with respect to direction A to move movable half-mold 6 towards stop plate 5 and away from fixed half-mold 4.

Axes B, C, D, E, F being perpendicular to direction A, levers 20a, 20b, 20c, 20d of lever mechanisms 14a, 14b, 14c, 14d lie, as toggle mechanism 11 moves between the extended configuration and the contracted configuration, in respective planes P, P', P'', P''' parallel to direction A at all times.

Similarly, as toggle mechanism 11 moves between the extended configuration and the contracted configuration, levers 21a, 21b, 21c, 21d of lever mechanisms 14a, 14b, 14c, 14d lie in respective planes Q, Q', Q'', Q''' parallel to direction A at all times.

As toggle mechanism 11 moves between the extended configuration and the contracted configuration, levers 22a, 22b, 22c, 22d of lever mechanisms 14a, 14b, 14c, 14d lie in respective planes R, R', R'', R''' parallel to direction A at all times.

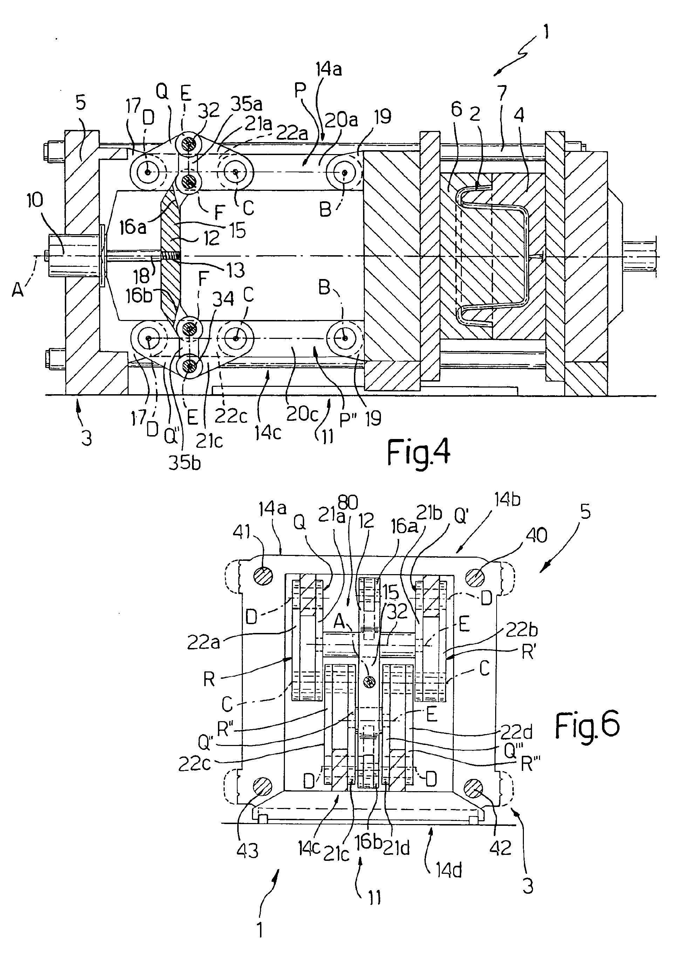

As shown in Figures 3 and 6, plane Q is interposed between direction A and plane R; plane Q' is interposed between direction A and plane R'; and plane Q'' is interposed between direction A and plane R''.

Similarly, plane Q''' is interposed between direction A and plane R'''.

Planes Q and Q'', R and R'', Q' and Q''', R' and R''' are parallel to each other and so spaced apart to prevent levers 21a, 22a, 21b and 22b from interfering respectively with levers 21c, 22c, 21d and 22d as toggle mechanism 11 moves between the contracted configuration and the extended configuration.

Planes Q and R'' are parallel to each other and so spaced apart to prevent interference between levers 21a and 22c as toggle mechanism 11 moves between the contracted configuration and the extended configuration.

Similarly, planes Q' and R''' are parallel to each other and so spaced apart to prevent interference between levers 21b and 22d as toggle mechanism 11 moves between the contracted configuration and the extended configuration.

Planes R, R' laterally define a compartment 80 (Figures 3 and 6) housing planes P, P', P'' P''', Q, Q', Q'', Q''', R" and R''' (Figures 3 and 6).

Plane P is parallel to and spaced apart from plane P'', and plane P' is parallel to and spaced apart from plane P''', so that levers 20a and 20b do not interfere respectively with levers 20c and 20d as toggle mechanism 11 moves between the extended configuration and the contracted configuration.

When toggle mechanism 11 (Figure 4) is in the extended configuration, axes D, C and B of lever mechanisms 14a, 14b lie in a first plane parallel to direction A and horizontal in use; and axes D, C and B of lever mechanisms 14c, 14d lie in a second plane parallel to direction A and also horizontal in use. Also, connecting rods 35a and 35b are perpendicular to direction A, each with respective axis F interposed vertically between respective axis E and direction A.

When toggle mechanism 11 (Figure 5) is in the contracted configuration, levers 20a, 21a, 22a; 20b, 21b, 22b; 20c, 21c, 22c; 20d, 21d, 22d are inclined with respect to direction A, so that relative axes C intersect direction A, and axis E of each connecting rod 35a, 35b is interposed vertically between relative axis F and direction A.

With reference to Figure 6, levers 21c, 21d, 22c, 22d are so sized, and the relative position of pin 32 and lever mechanisms 14c, 14d are such as to prevent lever mechanisms 14c and 14d interfering with pin 32 when toggle mechanism 11 is in the contracted configuration.

When movable half-mold 6 is in an intermediate position between the closed position and the open position, toggle mechanism 11 is in an intermediate configuration (Figure 7) between the contracted configuration and the extended configuration.

In said intermediate configuration, connecting rods 35a and 35b are inclined symmetrically with respect to direction A.

More specifically, connecting rod 35a is inclined so that its axes E, F lie in a plane extending parallel to direction A and interposed vertically between direction A and axis D of end portion 16a.

Similarly, connecting rod 35b is inclined so that its axes E, F lie in a plane extending parallel to direction A and interposed vertically between direction A and axis D of end portion 16b.

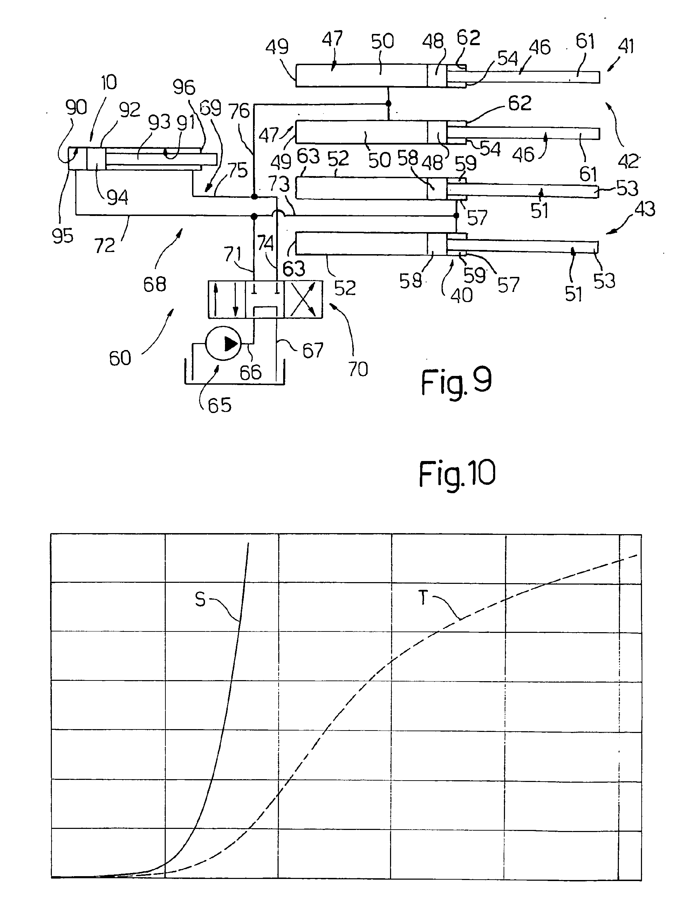

Press 1 advantageously comprises a number of - in the example shown, four - actuators 40, 41, 42, 43. Each actuator 41, 42 comprises a respective rod 46 (Figures 1 and 9) connected to stop plate 5; and a respective sleeve 47 (Figures 1 and 9) connected directly to movable half-mold 6, detached from lever mechanisms 14a, 14b, 14c, 14d of toggle mechanism 11, and mounted to slide in direction A with respect to relative rod 46. Similarly, each actuator 40, 43 comprises a respective rod 51 connected operatively to stop plate 5 (Figures 1 and 2); and a respective sleeve 52 (Figures 1 and 2) connected directly to movable half-mold 6, detached from toggle mechanism 11, and mounted to slide in direction A with respect to respective rod 51. Actuators 40, 41, 42, 43 are activated selectively to move movable half-mold 6 into the open position, and levers 20a, 20b, 20c, 20d into a position substantially parallel to direction A, and to move movable half-mold 6 into the closed position, and levers 20a, 20b, 20c, 20d into an inclined position with respect to direction A.

More specifically, stop plate 5 and movable half-mold 6 are both substantially square, with two sides positioned vertically and two sides positioned horizontally in use.

Stop plate 5 has a projection 45 (Figures 1, 2, 3) at each corner, and movable half-mold 6 has a projection 44 (Figures 1, 3) at each corner.

Actuators 40 and 41 lie in the same horizontal plane. More specifically, each actuator 40, 41 is connected at opposite ends to a projection 45 at a respective top corner of stop plate 5, and to a corresponding projection 44 at a respective top corner of movable half-mold 6.

Similarly, actuators 42 and 43 lie in the same horizontal plane located, in use, beneath and on the opposite side of direction A to the horizontal plane of actuators 40 and 41 . More specifically, each actuator 42, 43 is connected at opposite ends to a projection 45 at a respective bottom corner of stop plate 5, and to a corresponding projection 44 at a respective bottom corner of movable half-mold 6.

Actuators 41, 42 are single-acting, and move movable half-mold 6 from the closed position to the open position.

Rod 46 of each actuator 41, 42 (Figures 1, 2, 9) is fixed to relative projection 45 and extends parallel to direction A, and sleeve 47 of each actuator 41, 42, surrounds respective rod 46 coaxially and is fixed to relative projection 44.

More specifically, rod 46 has a first end 61 (Figures 1, 9) fixed to projection 45 of stop plate 5; and a second end opposite end 61 and defined by an enlargement 48 (Figure 9) cooperating in fluidtight manner with sleeve 47.

Sleeve 47 has a first end 49 (Figures 1, 9) fixed to projection 44 of half-mold 6; and a second end 62 opposite first end 49 and fitted through with rod 46.

Sleeve 47 and rod 46 define a variable-volume chamber 50 bounded at opposite ends by enlargement 48 of rod 46 and by end 49 of sleeve 47.

Chamber 50 is connected to a pressurized-fluid supply circuit 60. Rod 46 being fixed to stop plate 5, pressurized-fluid supply by circuit 60 into chamber 50 causes sleeve 47 to move parallel to direction A, thus moving end 49 away from enlargement 48, and movable half-mold 6 away from fixed half-mold 4.

Actuators 40, 43 are single-acting, and move movable half-mold 6 from the open position to the closed position. Rod 51 of actuator 40 (Figures 1, 2, 9) extends parallel to direction A and is integral with stop plate 5, and sleeve 52 surrounds rod 51 coaxially and is integral with movable half-mold 6.

More specifically, rod 51 has a first end 53 (Figures 2, 9) fixed to projection 45 of stop plate 5 by a flange 55 (Figure 2) and four cross members 56 (Figure 2); and a second end opposite first end 53 and defined by an enlargement 58.

More specifically, end 53 is fixed to projection 45 of stop plate 5 by a flange 55 (shown in Figure 2) and a number of - in the example shown, four - cross members 56 (also only shown in Figure 2).

More specifically, flange 55 is interposed, in direction A, between movable half-mold 6 and fixed half-mold 4, regardless of the position of movable half-mold 6, and is fixed to stop plate 5 by cross members 56.

End 53 is located at the opposite end of rod 51 to stop plate 5, and is integral with flange 55. More specifically, cross members 56 are located outside sleeve 52.

Sleeve 52 has a first end 57 (Figures 2, 9) fixed to half-mold 6 and fitted through with rod 51; and a second end 63 (Figure 9) opposite first end 57.

Sleeve 52 and rod 51 define a variable-volume chamber 59 bounded in fluidtight manner between end 57 of sleeve 52 and enlargement 58 of rod 51.

Chamber 59 is connected to circuit 60. When pressurized fluid is fed by circuit 60 into chamber 59, rod 51, being fixed to flange 55, remains stationary, and sleeve 52 moves parallel to direction A to move end 63 away from enlargement 58, and movable half-mold 6 away from stop plate 5.

Actuator 43 is identical to actuator 40 and therefore not described for the sake of simplicity.

Circuit 60 is designed to simultaneously activate actuator 10 and actuators 40, 43, so as to move toggle mechanism 11 into the extended configuration and lock movable half-mold 6 against fixed half-mold 4.

Alternatively, circuit 60 simultaneously activates actuator 10 and actuators 41, 42 to release movable half-mold 4 and move toggle mechanism 11 into the contracted configuration.

With particular reference to Figure 9, circuit 60 comprises a pump 65 having a delivery line 66 and an intake line 67; and a first fluid line 68 connecting one of lines 66, 67 fluidically to a first chamber 90 of actuator 10 and to chambers 59 of actuators 40, 43.

Circuit 60 also comprises a second fluid line 69 connecting the other of lines 66, 67 fluidically to a second chamber 91 of actuator 10 and to chambers 50 of actuators 41, 42.

Circuit 60 also comprises a known valve 70, which can be set to a first configuration connecting lines 66, 67 respectively to lines 68, 69, and a second configuration connecting lines 66, 67 respectively to lines 69, 68.

More specifically, line 68 comprises a first portion 71 connected fluidically to valve 70 directly, and from which branch off a second portion 72 and a third portion 73.

More specifically, second portion 72 is connected fluidically to chamber 90 directly; while third portion 73 in turn branches off into two conduits connected fluidically to chambers 59 of actuators 40, 43 directly.

Line 69 comprises a first portion 74 connected fluidically to valve 70 directly, and from which branch off a second portion 75 and a third portion 76.

More specifically, second portion 75 is connected fluidically to chamber 91 of actuator 10 directly; while third portion 76 in turn branches off into two conduits connected fluidically to chambers 50 of actuators 41, 42.

Actuator 10 is double-acting, and briefly comprises a sleeve 92; and a piston 93 sliding in fluidtight manner inside sleeve 92, and having an end enlargement 94 cooperating in fluidtight manner with sleeve 92.

More specifically, piston 93 is integral with portion 18.

Chamber 90 is defined between enlargement 94 and a first end 95 of sleeve 92; and chamber 91 is defined between enlargement 94 and a second end 96, opposite first end 95, of sleeve 92.

With reference to Figure 10, curve S shows the position of movable half-mold 6 alongside variations in the position of spider 12 in press 1.

Following an initial transient, curve S is substantially linear.

With reference to Figure 10, curve T shows the position of the movable half-mold alongside variations in the position of spider 12 in known presses.

Operation of press 1 will now be described commencing with toggle mechanism 11 in the contracted configuration, and movable half-mold 6 in the open position (Figure 5).

As of the contracted configuration, circuit 60 feeds pressurized fluid into chambers 59 of actuators 40, 43 to move toggle mechanism 11 into the intermediate configuration (Figure 7).

More specifically, valve 70 is set to the first configuration connecting line 66 to chamber 90 of actuator 10 and to chambers 59 of actuators 40, 43, and connecting line 67 to chamber 91 of actuator 10 and to chambers 50 of actuators 41, 42.

As a result, chambers 59 of actuators 40, 43 are pressurized, so that end 57 of each sleeve 52 moves away from enlargement 58 of relative rod 51.

Movable half-mold 6, to which sleeves 52 are connected, therefore moves towards fixed half-mold 4 and away from stop plate 5, to which rods 51 are connected.

Once the intermediate configuration is crossed, circuit 60 arrests actuators 40, 43 upon toggle mechanism 11 assuming the extended configuration (Figures 2, 3, 4) corresponding to the closed position of movable half-mold 6.

In the closed position, movable half-mold 6 cooperates with fixed half-mold 4 to define injection cavity 2.

Moreover, in the closed position, levers 20a, 21a, 22a, 20b, 21b, 22b, 20c, 21c, 22c, 20d, 21d, 22d of lever mechanisms 14a, 14b, 14c, 14d are positioned substantially parallel to direction A.

Simultaneously with the movement of actuators 40, 43, circuit 60 pressurizes chamber 90 of actuator 10, so that piston 94 moves towards end 96 of sleeve 92, and portion 18 pushes spider 12 towards fixed half-mold 4.

Since spider 12 is being moved towards fixed half-mold 4 by the action of actuators 40, 43, the force exerted on spider 12 by actuator 10 at this stage is practically negligible.

Circuit 60 and actuator 10 are so designed that, during the movement of actuators 40, 43, portion 18 only performs part, roughly a third, of its total travel.

Portion 18 of actuator 10 completes its travel once toggle mechanism 11 reaches the extended configuration, so as to grip movable half-mold 6 against fixed half-mold 4 by means of toggle mechanism 11.

Actuator 10 thus locks toggle mechanism 11 in the extended configuration to exert considerable gripping force on movable half-mold 6 in opposition to the pressure of the molten material inside cavity 2.

As toggle mechanism 11 moves between the contracted configuration and the extended configuration, there is no interference between levers 20a and 20c, 21a and 21c, 22a and 22c of lever mechanism 14a and 14c.

Similarly, there is no interference between levers 20b and 20d, 21b and 21d, 22b and 22d of lever mechanisms 14b and 14d.

As such, levers 20a, 21a, 22a, 20b, 21b, 22b, 20c, 21c, 22c, 20d, 21d and 22d can be fully extended into a position parallel to direction A.

To restore toggle mechanism 11 to the contracted configuration, and movable half-mold 6 to the open position, valve 70 is switched to the second configuration connecting line 66 to chamber 91 of actuator 10 and to chambers 50 of actuators 41, 42. When valve 70 is in the second configuration, line 67 is connected to chamber 90 of actuator 10 and to chambers 59 of actuators 40, 43.

Chamber 91 of actuator 10 and chambers 50 of actuators 41, 42 are therefore pressurized.

Over an initial portion of the travel of movable half-mold 6 into the open position, the locking action on movable half-mold 6 is released, and levers 20a, 20b, 20c, 21a, 21b, 21c, 22a, 22b, 22c begin tilting with respect to direction A.

At this stage, movable half-mold 6 is moved predominantly by actuator 10 by means of toggle mechanism 11.

More specifically, chamber 91 being pressurized, rod 93 moves towards end 95 to move movable half-mold 6 away from fixed half-mold 4.

Over a final portion of the travel of movable half-mold 6 into the open position, movable half-mold 6 is moved predominantly by actuators 41, 42, until it reaches the open position and toggle mechanism 11 assumes the contracted configuration.

More specifically, chambers 50 of actuators 41, 42 are pressurized to move movable half-mold 6 into the open position.

Since spider 12 is being moved towards stop plate 5 by the action of actuators 41, 42, the force exerted on spider 12 by actuator 10 at this final stage is negligible.

As it moves towards stop plate 5, movable half-mold 6 draws sleeves 52 of actuators 40, 43 along with it, so that sleeves 52 slide with respect to respective rods 51.

The advantages of press 1 according to the present invention will be clear from the foregoing description.

In particular, movable half-mold 6 is connected directly to rods 46, 51 of actuators 40, 41, 42, 43, whereas stop plate 5 is connected directly to sleeves 47, 52 of actuators 40, 41, 42, 43.

Since actuators 40, 41, 42, 43 transmit motion directly to movable half-mold 6, the movement of movable half-mold 6 depends linearly on the movement of sleeves 47, 52.

The speed and acceleration of movable half-mold 6, as it moves between the open position and the closed position, can therefore be controlled easily, even in the event of fast acceleration and speed of movable half-mold 6, without producing severe stress or vibration on the component parts of press 1.

Press 1 also prevents any interference between levers 20a and 20c, 21a and 21c, 22a and 22c of lever mechanisms 14a, 14c, and between levers 20b and 20d, 21b and 21d, 22b and 22d of lever mechanisms 14b, 14d, as toggle mechanism 11 moves between the contracted configuration and the extended configuration.

For a given longitudinal travel of the movable half-mold between the open and closed positions, the overall height of press 1 can therefore be reduced with respect to the height of known presses; and, conversely, for a given overall height of the press, the longitudinal travel of movable half-mold 6 between the open and closed positions can be increased with respect to the longitudinal travel of the movable half-mold of known presses.

Finally, as shown in Figure 10, press 1 provides for achieving the same movement of movable half-mold 6 with a much smaller movement of spider 12 than on known presses.

Clearly, changes may be made to press 1 without, however, departing from the protective scope as defined in the accompanying Claims.

## Claims

1. An injection press (1) comprising:
- a first half-mold (6) and a second half-mold (4); said first half-mold (6) being movable, in a direction (A) with respect to said second half-mold (4), between a first position, in which it cooperates with said second half-mold (4) to define an injection cavity (2), and a second position, in which it is detached from said second half-mold (4); and
- at least one lever mechanism (14a; 14b; 14c; 14d) comprising a first lever (21a, 22a; 21b, 22b; 21c, 22c; 21d, 22d) connected operatively to a fixed portion (5) of said press (1), and a second lever (20a; 20b; 20c; 20d) connected operatively to said first half-mold (6) and to said first lever (21a, 22a; 21b, 22b; 21c, 22c; 21d, 22d); said second lever (20a; 20b; 20c; 20d) being substantially parallel to said direction (A) when said first half-mold (6) is in said first position; said second lever (20a; 20b; 20c; 20d) being inclined with respect to said direction (A) when said first half-mold (6) is in said second position;
and **characterized by** comprising at least one variable-length actuator (41, 42; 40, 43); said actuator (41, 42; 40, 43) comprising a first member (46; 51) connected to said fixed portion (5), and a second member (47; 52) connected directly to said first half-mold (6) and detached from said lever mechanism (14a, 14b, 14c, 14d) ;
said first member (46; 51) and said second member (47; 52) sliding with respect to each other in said direction (A);
said actuator (41, 42; 40, 43) being selectively activated to move said first half-mold (6) into said first position and said second lever (20a, 20b, 20c, 20d) into a position substantially parallel to said direction (A), and to move said first half-mold (6) into said second position and said second lever (20a, 20b, 20c, 20d) into a position inclined with respect to said direction (A).

2. A press as claimed in Claim 1, **characterized in that** said first member (46; 51) and said second member (47; 52) are connected telescopically to each other; and **in that** one (46; 51) of said first (46; 51) and second (47; 52) members defines a rod (46; 51) of said actuator (41, 42; 40, 43), and the other (47; 52) of said first (46; 51) and second (47; 52) members defines a sleeve (47; 52) of said actuator (41, 42; 40, 43) externally surrounding said rod (46; 51).

3. A press as claimed in Claim 2, **characterized in that** said first member (46; 51) defines said rod (46; 51), and said second member (47; 52) defines said sleeve (47; 52).

4. A press as claimed in Claim 2 or 3, **characterized in that** said rod (46; 51) and said sleeve (47; 51) define in fluidtight manner a chamber (50; 59) for a pressurized fluid; said fluid being fed by actuating means (60) into said chamber (50; 59) to produce a relative movement between said rod (46; 51) and said sleeve (47; 52).

5. A press as claimed in Claim 4, **characterized by** comprising two said actuators (41, 42; 40, 43);
a first (40, 43) of said actuators (41, 42; 40, 43) being activated to move said first half-mold (6) from said second position to said first position;
a second (41, 42) of said actuators (41, 42; 40, 43) being activated to move said first half-mold (6) from the first position to said second position.

6. A press as claimed in any one of the foregoing Claims, **characterized by** comprising push means (10) interposed between said lever mechanism (14a; 14b; 14c; 14d) and said fixed portion (5), and acting, via the lever mechanism (14a; 14b; 14c; 14d), on said first half-mold (6) to lock it against said second half-mold (4).

7. A press as claimed in Claim 6, **characterized in that** said push means (10) and said actuator (41, 42; 40, 43) are activated simultaneously.

8. An injection press (1) comprising:
- a first half-mold (6) and a second half-mold (4); said first half-mold (6) being movable, in a direction (A) with respect to said second half-mold (4), between a first position, in which it cooperates with said second half-mold (4) to define an injection cavity (2), and a second position, in which it is detached from said second half-mold (4); and
- at least one pair of lever mechanisms (14a, 14c; 14b, 14d), which are interposed between a fixed portion (5) of said press (1) and said first half-mold (6), are superimposed one over the other, and are movable between an extended configuration and a contracted configuration to define said first and said second position of said first half-mold (6) respectively;
and **characterized in that** said lever mechanisms (14a, 14c; 14b, 14d) have homologous levers (20a, 20c; 21a, 21c; 22a, 22c; 20b, 20d; 21b, 21d; 22b, 22d) which, as they move between the contracted configuration and the extended configuration, lie in parallel, spaced planes (P, P''; Q, Q''; R, R''; P', P'''; Q', Q'''; R', R''') to prevent interference between the homologous levers (20a, 20c; 21a, 21c; 22a, 22c; 20b, 20d; 21b, 21d; 22b, 22d).
